# EUROPEAN PATENT APPLICATION

(11) **EP 1 777 558 A2**
(43) Date of publication of application: **25.04.2007**
(21) Application number: 05027098.2
(22) Date of filing: 12.12.2005
(51) Int. Cl.: G02B 6/00

(54) **Thermal spreading sheet and method for manufacturing the same, and backlight unit with the same**

(30) Priority: 24.10.2005 KR 2005100342
(71) Applicant: LG Electronics Inc., Yongdungpo-gu Seoul (KR)
(72) Inventor: Hwang, Kab Jin, Chungji-si Choongchungbuk-do 360-170 (KR)
(74) Representative: Beyer, Andreas

(57) **Abstract**

The present invention relates to a thermal spreading sheet with superior ductility and strength, and a method for manufacturing the same.

One method for manufacturing the thermal spreading sheet according to the present invention comprises the steps of mixing graphite powder and binder; and applying the mixture of graphite powder and binder onto the surface of a reflective sheet to form the thermal spreading sheet with a predetermined thickness. The binder is preferable to contain polyurethane, acrylic or silicon. And, the mixture of graphite powder and binder is preferable to contain copper or silver.

Another method for manufacturing the thermal spreading sheet according to the present invention comprises the steps of adding an acrylic resin into a fine graphite particle to form a nano-composite; and compressing the nano-composite at a high temperature. The method for manufacturing the thermal spreading sheet further comprises the step of adding a resin having high thermal conductivity into the nano-composite.

## Description

### BACKGROUND OF THE INVENTION

### Field of the Invention

The present invention relates to a thermal spreading sheet and a method for manufacturing the same. Particularly, the present invention relates to a thermal spreading sheet with superior ductility and strength, and a method for manufacturing the same.

### Description of the Related Art

Liquid Crystal Display device (hereinafter, "LCD device") is an electrical device which changes electrical data generated from many apparatuses into visual data, and transfers them by using variation of crystal transmissivity according to applied voltage.

LCD device is a device for displaying information, but does not have a light source in itself. Thus, LCD device needs an extra device to uniformly brighten the entire screen of LCD device by a light source installed on the rear surface of LCD device. As such extra device, Back Light Unit (hereinafter, "BLU") providing a light to the screen of LCD device is used.

BLU is classified into direct-light type and edge-light type according to the installed position of Cold Cathode Fluorescent Lamp (hereinafter, "CCFL"). In the direct-light type of BLU, a lamp is disposed under liquid crystal panel, and in the edge-light type BLU, a lamp is disposed on a side of light guiding plate.

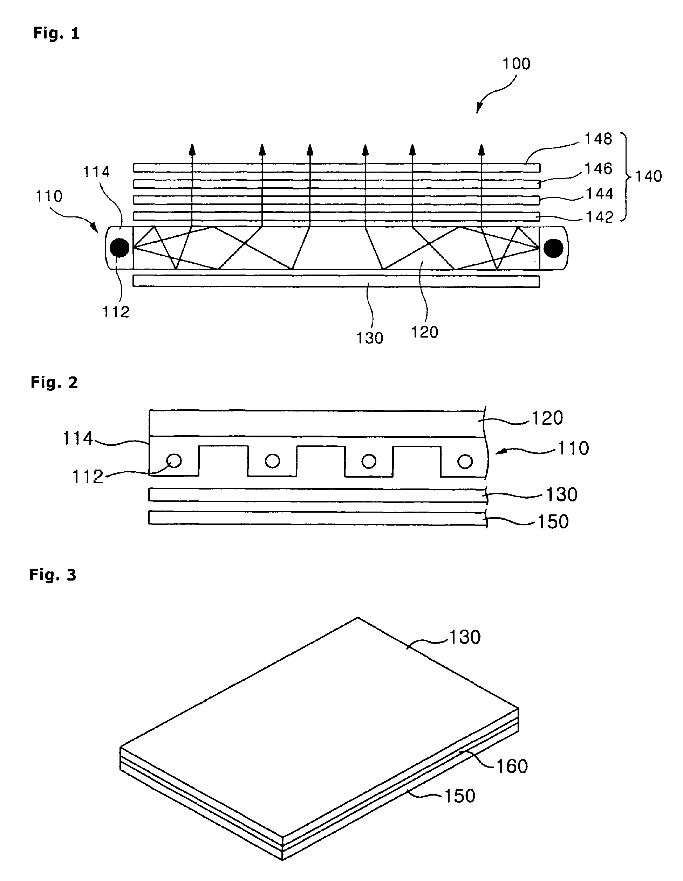

Fig.1 is a cross-sectional view schematically showing BLU of LCD device.

Fig.1 shows edge-light type of BLU **100.** The edge-light type of BLU **100** comprises a light source unit **110,** a light guiding plate **120,** a reflective sheet **130,** and an optical film **140.**

The light source unit **110** comprises at least one CCFL **112** generating a light with a predetermined wavelength, and a light source reflector **114.** The light generated from CCFL **112** is reflected by the light source reflector **114** made up of reflective material, and the reflective sheet **130.** Then, as shown in Fig. 1, the reflected light is diffused uniformly through the entire light guiding plate **120.**

The optical film **140** comprises a diffusion sheet **142,** a prism sheet **144,** a protection sheet **146,** and a reflective polarization film **148.** The reflective polarization film **148** is optionally used.

The function of each element in the optical film **140** is explained as follows.

The light uniformly diffused in the light guiding plate **120** passes through the diffusion sheet **142.** The diffusion sheet **142** diffuses or condenses the light having passed through the light guiding plate **120** so that brightness becomes uniform and the viewing angle becomes wider.

Brightness of the light having passed through the diffusion sheet **142** is remarkably decreased. To solve this problem, a prism sheet **144** is used. The prism sheet **144** refracts the light having passed through the diffusion sheet **142,** and converges the light incident in low angle to the direction substantially perpendicular to the prism sheet **144** so that the brightness is increased within the range of effective viewing angle.

The protection sheet **146** is disposed on the prism sheet **144.** Thus, the protection sheet **146** prevents the prism sheet **144** from being damaged, and makes the narrowed viewing angle wider.

LCD device (not shown) disposed on the optical film **140** has the property to pass through only a part of light exiting from the optical film **140.** For example, longitudinal wave (P-wave) is passed through, and transverse wave (S-wave) is absorbed. Therefore, the reflective polarization film **148** is disposed to use the absorbed transverse wave.

The reflective polarization film **148** reflects the transverse wave (S-wave) in the light diffused by the protection sheet **146** to the direction of light guiding plate **120,** and provides the longitudinal wave (P-wave) to the LCD device (not shown).

The reflected transverse wave is reflected again by the light guiding plate **120** or the reflective sheet **130.** The reflected transverse wave is changed to the light including longitudinal wave and transverse wave by re-reflection. The changed light passes through the diffusion sheet **142,** the prism sheet **144** and the protection sheet **146,** and enters the reflective polarization film **148** again. Therefore, BLU **100** can increase the efficiency of light through the above-described process.

Unlike the edge-light type of BLU, the direct-light type of BLU has a reflective sheet under a light source unit. In this structure, most heat generated from the light source unit is transferred to the reflective sheet. The reflective sheet is overheated by the transferred heat, and thus deformation of the reflective sheet may be occurred.

### SUMMARY OF THE INVENTION

An object of the present invention is to provide a thermal spreading sheet which can effectively absorb heat transferred to a reflective sheet, and a method for manufacturing the same, in order to resolve the above-described problems occurred in BLU.

Another object of the present invention is to provide BLU comprising the thermal spreading sheet.

A method for manufacturing the thermal spreading sheet according to the present invention comprises the steps of mixing graphite powder and binder; and applying the mixture of graphite powder and binder onto the surface of a reflective sheet to form the thermal spreading sheet with a predetermined thickness.

The binder is preferable to contain polyurethane, acrylic or silicon. And, the mixture of graphite powder and binder is preferable to contain copper or silver.

Another method for manufacturing the thermal spreading sheet according to the present invention comprises the steps of adding an acrylic resin into a fine graphite particle to form a nano-composite; and compressing the nano-composite at a high temperature.

The method for manufacturing the thermal spreading sheet further comprises the step of adding a resin having high thermal conductivity into the nano-composite.

The thermal spreading sheet according to the present invention comprises a mixture of graphite powder and binder, wherein the thermal spreading sheet is formed as coating with a predetermined thickness on the surface of a reflective sheet.

BLU according to the present invention comprises a thermal spreading sheet comprising a mixture of graphite powder and binder, wherein the thermal spreading sheet is formed as coating with a predetermined thickness on the surface of a reflective sheet.

The thermal spreading sheet according to the present invention can absorb and spread heat of the reflective sheet effectively. Also, it is possible to prevent damage of the thermal spreading sheet according to the present invention to maintain shape of the thermal spreading sheet.

### BRIEF DESCRIPTION OF THE DRAWING

Fig.1 is a cross-sectional view showing relation of a light source and a reflective plate forming a back light unit (BLU).
Fig.2 is a cross-sectional view schematically showing direct-light type of BLU comprising a thermal spreading sheet, according to the present invention, and
Fig. 3 is a perspective view showing relation of the reflective plate and the thermal spreading sheet according to an aspect of the present invention.
Fig. 4 is a perspective view showing relation of the reflective plate and the thermal spreading sheet according to another aspect of the present invention.

### DETAILED DESCRIPTION OF THE INVENTION

The present invention will be more clearly understood from the detailed description in conjunction with the following drawings.

Fig.2 is a cross-sectional view schematically showing the direct-light type of BLU according to the present invention. The same reference numerals are used for the same elements of BLU as shown in Fig. 1.

In the direct-light type BLU according to the present invention, a light source unit **110** comprising a plurality of CCFL **112** installed on a light source reflector **114** is installed under a light guiding plate **120.** A reflective sheet **130** is disposed under the light source unit **110**.

The reflective sheet **130** disposed under the light source unit **110** reflects the light exited from the light guiding plate **120** again to the light guiding plate **120**. And, heat generated from the light source unit **110** during the light generation process is transferred to the reflective sheet **130** disposed under the light source unit **110.**

In BLU according to the present invention, the thermal spreading sheet **150** is disposed under the reflective sheet **130** in order to spread heat transferred to the reflective sheet **130.**

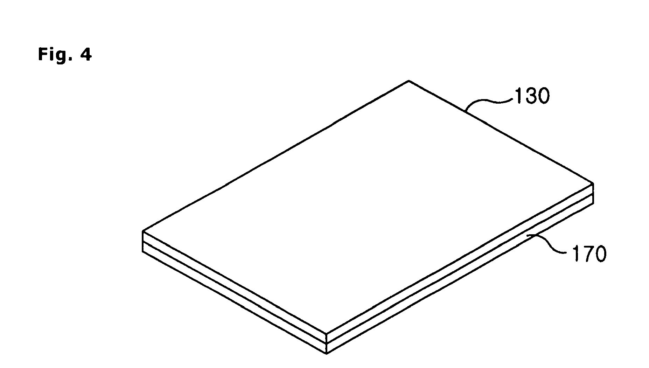

Fig. 3 is a perspective view showing relation of the reflective plate and the thermal spreading sheet according to an aspect of the present invention. Fig. 4 is a perspective view showing relation of the reflective plate and the thermal spreading sheet according to another aspect of the present invention.

In the present invention, as shown in Fig. 3, the thermal spreading sheet **150** may be attached onto the bottom surface of the reflective sheet **130** by adhesive **160.** Also, as shown in Fig. 4, a thermal spreading layer **170** may be coated on the bottom surface of the reflective sheet **130.**

The thermal spreading sheet **150,** which absorbs heat transferred to the reflective sheet **130** and spreads it to the outside, contains graphite having superior thermal conductivity. The thermal spreading sheet **150** having the shape shown in Fig. 3 is manufactured by compressing the graphite at high temperature.

The thermal spreading sheet **150** can absorb heat transferred to the reflective sheet **130** effectively since thermal conductivity of the thermal spreading sheet **150** is superior. However, the thermal spreading sheet **150** may be easily broken due to the physical property of material (graphite) and the manufacturing process using high temperature-compression.

When the thermal spreading sheet **150** attached to the reflective sheet **130** by adhesive **160** is broken and separated from the reflective sheet **130,** the function of absorbing and spreading heat for the reflective sheet **130** is declined.

The thermal spreading sheet **150** may be easily broken because the thermal spreading sheet **150** is manufactured by using graphite powder as main component. When graphite powder is formed by compressing, the bonding force between powder particles becomes weak. Therefore, the thermal spreading sheet **150** may be deformed or broken easily by external force.

The thermal spreading sheet and the method for manufacturing the same to resolve the problem resulted from the material constituting the thermal spreading sheet will be explained in detail below.

The major components contained in the thermal spreading sheet according to a first embodiment of the present invention are graphite powder and binder. Graphite powder is mixed with viscous binder, and their mixture is applied to the bottom surface of the reflective sheet **130.** Preferably, the binder may contain the material which has high thermal conductivity and high heat resistance, such as polyurethane, acrylic or silicon.

The binder used in the first embodiment of the present invention is polyurethane. The physical and chemical properties of polyurethane are as follows.

Polyurethan is rubber-state elastic body of polymer compounds having urethane bond -OCONH- within the molecule. Recently, the use of polyurethan has been extended to various fields such as urethane rubbers, synthetic fibers, adhesives, paints, urethane forms, automobile bumpers, etc.

Generally, polyurethane is prepared by addition polymerization of diol (e.g. 1,4-buthandiol, etc.) and di-isocyanate (diphenylmethan di-isocyanate, etc.). For rubber, polyetherdiol such as polyethyleneglycol and polypropyleneglycol, and aliphatic polyester of terminal diol are used as diol. For urethane form, polyurethane is usually used in the thermosetting form by adding tri-isocyanate.

After graphite powder is mixed with polyurethane paste, the mixture is applied to the bottom surface of the reflective sheet. Therefore, the thermal spreading sheet with a predetermined thickness is formed on the bottom surface of the reflective sheet.

Graphite, which is the major component of the thermal spreading sheet, absorbs heat of the reflective sheet. Polyurethane unites graphite powder particles. Therefore, bonding of the graphite powder particles is not broken by polyurethane though external force is exerted on the thermal spreading sheet, and so the thermal spreading sheet is not broken easily.

In order to improve ductility of the mixture of graphite powder and polyurethane, copper (Cu) or silver (Ag) may be added thereto.

Prior to explaining the thermal spreading sheet and the method for manufacturing the same according to a second embodiment of the present invention, nano composite will be explained.

Nano composite is a mixture of at least two components. Nano composite means an artificially produced material from chemically distinguishable components that are combined with maintaining each component's properties so that each component's unique mechanical, physical, and chemical properties are reacted in mutually complementary way to achieve better property than each separate component.

Generally, component of the composite material for structure material is classified to base and reinforcement material.

Base bonds reinforcement materials each other, protects reinforcement materials from external environment, maintains the shape of composite material, and has enduring structure within composite material.

Reinforcement material enables composite material to have more excellent mechanical property than base by supporting external force, and is particle dispersed in base, whisker, or fiber-type component.

Composite material is classified into polymer matrix composite which has polymer material base (for example, epoxy) as base, metal matrix composite which has metal and alloy as base, and ceramic matrix composite which has ceramic as base.

In the composite material which has metal or ceramic as base, carbon fiber, silicon carbide fiber, and alumina fiber are used as reinforced fiber for weight lightening and high strength. Their special use for high temperature includes application of polymer matrix composite.

Nano composite means composite material using nano particles [for example, carbon nano fiber, carbon nano tube, or silicon carbide (SiC)] as reinforcement material. Such reinforcement material advantageously has various functions because its mechanical, thermal and electrical properties are more excellent than reinforcement material used for other composite material.

A second embodiment of the present invention by using the above-explained properties of nano composite will be explained below.

First, graphite powder is processed into nano size of fine particles. Nano composite is made by adding acrylic resin into the fine graphite particle.

Nano composite made by uniformly dispersing acrylic resin into the fine graphite powder particle has superior thermal stability, mechanical properties (ductility and tensile strength), thermal deformation temperature, and non-changeable dimension.

Then, the nano composite made by the fine graphite powder particle and acrylic resin is compressed at high temperature to form the final thermal spreading sheet.

Resin having superior thermal conductivity may be added to the mixture prior to conducting high-temperature compressing process.

The thermal spreading sheet manufactured according to the second embodiment has superior thermal conductivity as well as superior thermal stability, mechanical properties (ductility and tensile strength). Therefore, heat of the reflective sheet can be absorbed and spread effectively.

From the preferred embodiments for the present invention, it should be noted that modifications and variations can be made by a person skilled in the art in light of the above teachings. Therefore, it should be understood that changes may be made for a particular embodiment of the present invention within the scope and spirit of the present invention outlined by the appended claims.

## Claims

1. A method for manufacturing a thermal spreading sheet, comprising:
(a) mixing graphite powder and binder; and
(b) applying the mixture of graphite powder and binder onto the surface of a reflective sheet to form the thermal spreading sheet with a predetermined thickness.

2. The method of Claim 1, wherein the binder contains polyurethane, acrylic or silicon.

3. The method of Claim 2, wherein the mixture contains copper or silver.

4. A method for manufacturing a thermal spreading sheet, comprising:
(a) adding an acrylic resin into a fine graphite particle to form a nano-composite; and
(b) compressing the nano-composite at a high temperature.

5. The method of Claim 4, further including:
adding a resin having high thermal conductivity into the nano-composite.

6. A thermal spreading sheet comprising the mixture of graphite powder and binder, wherein the thermal spreading sheet is formed as a coating with a predetermined thickness on the surface of a reflective sheet.

7. A back light unit comprising a thermal spreading sheet comprising the mixture of graphite powder and binder,
wherein the thermal spreading sheet is formed as a coating with a predetermined thickness on the surface of a reflective sheet.

8. A back light unit manufactured by the method of Claim 4, including a thermal spreading sheet disposed on the lower part of a reflective sheet.

9. A back light unit manufactured by the method of Claim 5, including a thermal spreading sheet disposed on the lower part of a reflective sheet.
